## Europäisches Patentamt

## European Patent Office

## Office européen des brevets

(19)

(11) Veröffentlichungsnummer: **0 285 570**
**B1**

(12)

# EUROPÄISCHE PATENTSCHRIFT

(45) Veröffentlichungstag der Patentschrift:
24.10.90

(51) Int. Cl.⁵: **E03F 5/10**, B01D 21/24

(21) Anmeldenummer: **88810203.5**

(22) Anmeldetag: **28.03.88**

(54) **Tauchwand für Regen- und Klärbecken.**

(30) Priorität: **01.04.87 CH 1248/87**

(43) Veröffentlichungstag der Anmeldung:
**05.10.88 Patentblatt 88/40**

(45) Bekanntmachung des Hinweises auf die Patenterteilung:
**24.10.90 Patentblatt 90/43**

(84) Benannte Vertragsstaaten:
**AT CH DE FR LI**

(56) Entgegenhaltungen:
**EP-A- 0 086 749**

(73) Patentinhaber: **Nill, Werner, Eigenheimweg 45,
CH-8400 Winterthur(CH)**

(72) Erfinder: **Nill, Werner, Eigenheimweg 45,
CH-8400 Winterthur(CH)**

(74) Vertreter: **Gachnang, Hans Rudolf, Algisserstrasse 33,
CH-8501 Frauenfeld(CH)**

## Beschreibung

Die Erfindung betrifft eine in einem Regen- oder Klärbecken angeordnete, sich im wesentlichen über die gesamte Breite des Beckens erstreckende Tauchwand zur Rückhaltung von im Oberflächenbereich des Wassers schwimmenden Verunreinigungen. Es ist bereits bekannt, in Klärbecken von Abwasserreinigungsanlagen Tauchwände anzubringen, deren Unterkante tiefer liegt als die Überfallkante oder die Ueberlauföffnung des Klärbeckens, an der das Wasser abgeleitet wird. Die Tauchwand wird vorzugsweise möglichst nahe der Überfallkante des auslaufenden Wassers angebracht und verhindert, dass die auf der Wasseroberfläche schwimmenden Festkörper in den Überlauf gelangen und so ungereinigt die Kläranlage verlassen können.

Fest montierte Tauchwände haben den Nachteil, dass in ihrer Nähe das Anbringen einer Spülkippe zum Reinigen des Beckens erschwert bzw. die Reinigungswirkung der Spülkippe durch den grossen Abstand von der Wand vermindert wird.

Es sind auch schwimmende Tauchwände bekannt, die sich dem Niveau des Wasserspiegels anpassen und auf diese Weise aus dem Wirkungsbereich der Spülkippe hinausgeführt werden können. Diese Tauchwände haben den Nachteil, dass sie durch den Wasserschwall der Spülkippe den Kräften des Wasserschwalls ausgesetzt sind. Die Bauwerke müssen aus diesen Gründen aufwendig derstellt werden.

Aufgabe der vorliegenden Erfindung ist es, eine Tauchwand zu schaffen, welche die Wirkungsweise der Spülkippe nicht behindert und auch durch den von der Spülkippe erzeugten Wasserschwall nicht beschädigt werden kann.

Diese Aufgabe wird durch die kennzeichnenden Merkmale des Patentanspruches 1 gelöst.
Die direkt an der Unterkante der Spülkippe angebrachte Tauchwand hat den Vorteil, dass sie bei abgesenktem Wasserspiegel während der Reinigung durch die Spülkippe ausserhalb des Einflussbereiches des Wasserschwalls liegt und dabei einerseits selbst nicht den Kräften des Wasserschwalls ausgesetzt ist und andererseits die Wirkungsweise des Wasserschwalls nicht behindert. Des weiteren kann auf diese Weise die Tauchwand in geeigneter, geringer Distanz von der Überfallkante positioniert werden, was den Wirkungsgrad wesentlich steigert. Mit einer schräg zur Überfallkante hin verlaufenden Tauchwand kann zudem der Durchgangsquerschnitt des abfliessenden Wassers in idealer Weise eingestellt werden. Im weiteren lassen sich die Kosten für die Aufhängung der Tauchwand am Bauwerk einsparen.

Anhand zweier illustrierter Ausführungsbeispiele wird die Erfindung näher erläutert. Es zeigen:

Figur 1 einen Querschnitt durch ein Becken in einer Kläranlage mit einer beweglich angeordneten Tauchwand,
Figur 2 einen Querschnitt durch das Becken mit einer fest an der Spülkippe angebrachten Tauchwand und

Figur 3 einen Querschnitt durch das Becken mit einer beweglich angebrachten Tauchwand mit Schwimmer.

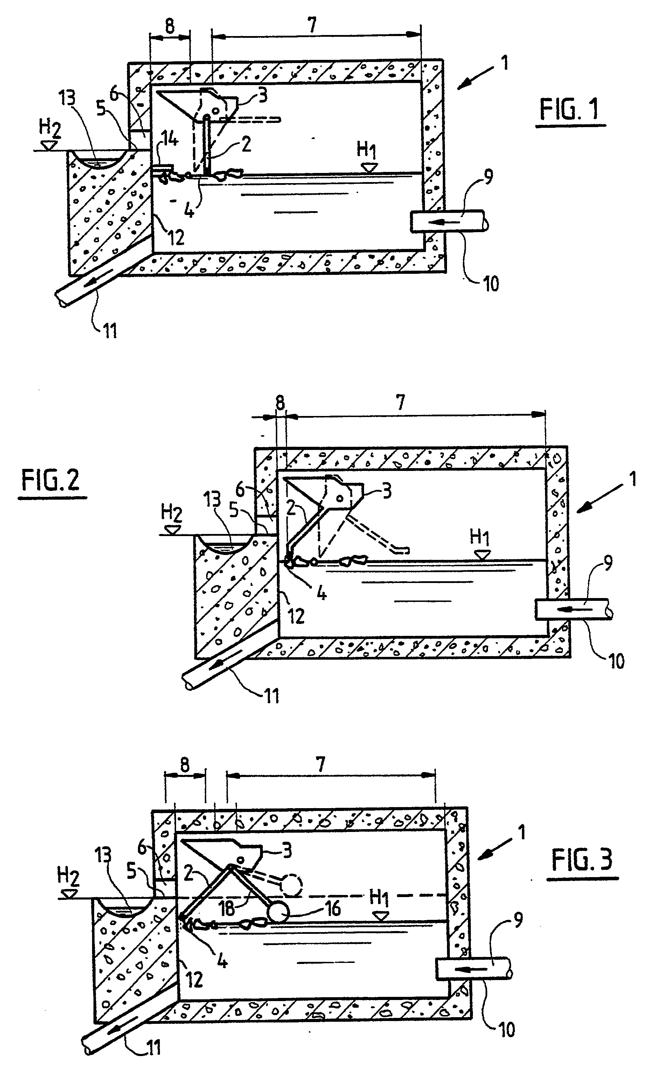

Im Klärbecken 1 gemäss Figur 1 ist eine nach unten ragende, sich im wesentlichen über die gesamte Breite des Beckens 1 erstreckende Tauchwand 2 an der Unterseite einer Spülkippe 3 befestigt. Das Niveau H1 der Unterkante 4 der Tauchwand 2 liegt tiefer als das Niveau H2 der Überströmkante 5 der oberen Ausflussöffnung 6 (Überlauf) des Beckens 1. Durch die Tauchwand 2 wird das Becken 1 in einem langen Hinterabschnitt 7 und einem möglichst kurzen Vorderabschnitt 8 unterteilt.

Das zuströmende Schmutzwasser 9 fliesst über die Eingangsleitung 10 in das Klärbecken 1 und gelangt über die Ausgangsleitung 11 in eine nicht näher dargestellte Kläranlage. Bei schwachem Regen vermag die Ausgangsleitung 11 die zusätzliche Meteorwassermenge auch noch zu schlucken. Bei Hochwasser, z.B. nach kurzen heftigen Niederschlägen, genügt die Ausgangsleitung 11 aber nicht mehr, um die zuströmende Wassermenge abfliessen zu lassen.

Der Wasserspiegel steigt an. Die durch das Regenwasser von Strassen, Plätzen usw. mitgeschwemmten Verunreinigungen und Gegenstände, wie z.B. Holz, Laub, Papier, werden ins Klärbecken transportiert und infolge der Strömung gegen den vorderen Abschnitt 8 bewegt. Die Konzentration der Verunreinigungen ist daher im Vorderabschnitt wesentlich höher als im Hinterabschnitt 7.

Um zu verhindern, dass auf dem Wasser schwimmende Verunreinigungen durch die Oeffnung 6 in den Ablaufkanal 13 gelangen können, wird nun vorgeschlagen, eine Tauchwand 2 vorzusehen, die die auf der Wasseroberfläche schwimmenden Festkörper im Hinterabschnitt 7 zurückhält, wenn der Wasserspiegel das Niveau H2 der Öffnung 6 erreicht. Damit möglichst wenige aufschwimmende Festkörper durch die Öffnung 6 hinausgelangen können, welche beim Ansteigen des Wasserspiegels von einem tiefen Niveau bereits im Vorderbereich 8 angelangt sind, ist es zweckmässig, den Vorderbereich 8 so schmal wie möglich zu halten. Dies gelingt mit der Tauchwand 2, die an der Spülkippe 3 befestigt ist, die nahe der auslaufseitigen Wand 2 des Beckens 1 an der Decke oder den Seitenwänden aufgehängt ist.

In der Ausführung nach Figur 2, in der die Tauchwand nicht senkrecht unter der Spülkippe 3 hängend angeordnet ist, sondern geneigt zur Öffnung 6 hin verläuft und dadurch den Abstand zur auslaufseitigen Wand 12 so weit verringert, dass nur gerade die durch die Öffnung 6 maximal austretende Wassermenge durchgelassen wird. Auf diese Weise wird verhindert, dass die aufschwimmenden Festkörper im Bereich 8 bei steigendem Wasserspiegel hinter der Tauchwand hindurch durch die Öffnung gelangen können.

Es ist zusätzlich möglich, den Vorderbereich 8 durch einen an der Beckenwand 12 unter der Oeffnung 6 angebrachten horizontalliegenden Wandabschnitt 14 enger zu gestalten.

Sowohl die vertikal verlaufende Tauchwand 2 als auch die geneigt zur auslaufseitigen Wand 12 verlaufende Tauchwand 2 kann fest oder gelenkig mit der Spülkippe 3 verbunden sein. Die gelenkigverbundene Tauchwand 2 hat den Vorteil, dass beim Schwenken der Spülkippe 3 die Tauchwand 2 nur einen minimalen Einfluss auf die Schwenkgeschwindigkeit der Spülkippe 3 ausübt.

In einer weiteren Ausgestaltung der Erfindung gemäss Figur 3 ist die Tauchwand 2 gelenkig an der Spülkippe 3 befestigt und zudem mit einem an einem Ausleger 18 befestigten Schwimmer 16 verbunden, der die Tauchwand 2 bei niedrigem Wasserstand (H1) gegen die Beckenwand 12 anlegt und erst bei steigendem Wasserstand (H2) einen sukzessiv wachsenden Vorderabschnitt 8 erzeugt. Die unterhalb der Tauchwand 2 angesammelten Verunreinigungen werden bei Schwenken der Tauchwand 2 in den Hinterabschnitt 7 abgedrängt und können nicht durch die Oeffnung 6 in den Ablaufkanal 13 gelangen.

Es ist selbstverständlich, dass die durch die an der Spülkippe 3 befestigte Tauchwand 2 hervorgerufene Schwerpunktsveränderung der Spülkippe 3 durch entsprechende Verschiebung der Drehachse oder durch Anbringen von Gegengewichten aufgehoben werden kann.

## Patentansprüche

1. Tauchwand in einem Regen- oder Klärbecken, dadurch gekennzeichnet, dass die Tauchwand (2) an der Unterseite einer über dem Klärbecken (1) aufgehängten Spülkippe (3) angebracht ist.

2. Tauchwand nach Anspruch 1, dadurch gekennzeichnet, dass die Tauchwand (3) fest oder gelenkig mit der Spülkippe (3) verbunden ist.

3. Tauchwand nach Anspruch 1 oder Anspruch 2, dadurch gekennzeichnet, dass die Tauchwand (2) vertikal angeordnet ist.

4. Tauchwand nach Anspruch 1 oder Anspruch 2, dadurch gekennzeichnet, dass die Tauchwand (2) geneigt zur Vertikalen angeordnet ist.

5. Tauchwand nach Anspruch 4, dadurch gekennzeichnet, dass die Unterkante der Tauchwand (2) in einem geringen Abstand (Vorderabschnitt (8)) zur ausflusseitigen Wand des Beckens (1) zu liegen kommt.

6. Tauchwand nach einem der Ansprüche 1, 4 und 5, dadurch gekennzeichnet, dass an der Tauchwand (2) ein Schwimmer (16) angebracht ist, der die Tauchwand (2) bei niedrigem Wasserstand (H1) gegen die ablaufseitige Wand (12) des Beckens (1) andrückt und der bei steigendem Wasserstand (H2) die Tauchwand (2) gegen die Vertikale schwenkt.

7. Tauchwand nach Anspruch 6, dadurch gekennzeichnet, dass der Schwimmer (16) an einem Ausleger (18) an der Tauchwand (2) befestigt ist.

8. Tauchwand nach einem der Ansprüche 1 bis 7, dadurch gekennzeichnet, dass an der abfusseitigen Wand des Beckens (1) ein den Abstand zur Tauchwand (2) verkleinernder horizontaler Wandabschnitt (14) angebracht ist.

## Claims

1. Baffle for basins and clarifier tanks, characterized by the fact that the baffle (2) is fitted on the underside of a suspended sluicing dump (3) fitted over the basin (1).

2. Baffle according to claim 1, characterized in that the baffle (2) is fixed or hinged with the sluicing dump (3).

3. Baffle according to Claims 1 or 2, characterized in that the baffle (2) is arranged vertically.

4. Baffle according to Claim 1 or 2, characterized in that the baffle (2) is arranged inclined to the vertical.

5. Baffle according to Claim 4, characterized in that the underneath edge of the baffle (2) comes to rest with a small clearance (front section) (3) to the outlet side wall of the basin (1).

6. Baffle according to Claims 1, 2 and 5, characterized in that a float (16) is fitted to the baffle (2) which presses the baffle (2) at low water level (H1) against the outlet side wall (12) of the basin (1) and which, as the water level (H2) increases, swivels the baffle (2) towards the vertical.

7. Baffle according to Claim 6, characterized in that the float (16) is fastened on an arm (18) on the baffle (2).

8. Baffle according to one of the claims 1 to 7, characterized in that there is a horizontal wall section (14) fitted on the discharge wall of the basin (1) to reduce the clearance to the baffle (2).

## Revendications

1. Paroi plongeante pour bassin d'accumulation d'eau de pluie ou de décantation, caractérisée en ce que la paroi plongeante (2) est disposée à la face inférieure d'une benne basculante (3) suspendue audessus du bassin de décantation (1).

2. Paroi plongeante selon la revendication 1, caractérisée en ce que la paroi plongeante (2) est reliée à la benne basculante (3) de façon rigide ou articulée.

3. Paroi plongeante selon la revendication 1 ou la revendication 2, caractérisée en ce que la paroi plongeante (2) est disposée verticalement.

4. Paroi plongeante selon la revendication 1 ou la revendication, caractérisée en ce que la paroi plongeante (2) est inclinée par rapport à la verticale.

5. Paroi plongeante selon la revendication 4, caractérisée en ce que le bord inférieur de la paroi plongeante (2) vient se placer à une faible distance (partie avant (8)) de la paroi du bassin (1) située du côté de l'évacuation.

6. Paroi plongeante selon l'une des revendications 1, 4 et 5, caractérisée en ce que, sur la paroi plongeante (2), il est disposé un flotteur (16) qui appuie la paroi plongeante (2) contre la paroi (12) du bassin (1) située du côté de l'évacuation en cas de bas niveau d'eau (H1) et qui amène, par pivotement, la paroi plongeante (2) vers la verticale lorsque le niveau d'eau (H2) monte.

7. Paroi plongeante selon la revendication 6, caractérisée en ce que le flotteur (16) est fixé à la paroi plongeante (2) par un balancier (18).

8. Paroi plongeante selon l'une des revendications 1 à 7, caractérisée en ce que, sur la paroi du bassin (1) située du côté de l'évacuation, il est disposé un tronçon de paroi horizontal (14) réduisant la distance jusqu'à la paroi plongeante (2).

FIG. 1

FIG.2

FIG.3